# EUROPÄISCHE PATENTSCHRIFT

(11) **EP 2 878 808 B1**
(45) Veröffentlichungstag und Bekanntmachung des Hinweises auf die Patenterteilung: **19.07.2017**
(21) Anmeldenummer: 13195270.7
(22) Anmeldetag: 02.12.2013
(51) Int. Cl.: H02J 9/06, F03D 7/02

(54) **Pitchsystems und Verfahren zum Betrieb eines Pitchsystems einer Windenergieanlage**
Pitch system and method for operating a pitch system of a wind turbine
Système de pas et procédé de fonctionnement d'un système de pas d'une installation éolienne

(43) Veröffentlichungstag der Anmeldung: 03.06.2015
(73) Patentinhaber: Moog Unna GmbH, 59423 Unna (DE)
(72) Erfinder: Pauli, Matthias, 33181 Bad Wünnenberg (DE); Vetter, Alf, 48317 Rinkerode (DE)
(74) Vertreter: Schmalz, Günther

(56) Entgegenhaltungen:
- EP-A1- 2 637 300
- US-A1- 2010 327 599
- US-A1- 2013 020 804
- US-A1- 2013 271 056

## Beschreibung

Die Erfindung betrifft ein Verfahren zum Betrieb eines Pitchsystems einer Windenergieanlage mit wenigstens einem Rotorblatt, wobei das Pitchsystem wenigstens einen Eingangsgleichrichter aufweist und wenigstens einen Pitchantrieb aufweist, wobei jedes Rotorblatt durch den einen Pitchantrieb oder wenigstens einen der mehreren Pitchantriebe um seine Längsachse drehbar ist, jeder Eingangsgleichrichter von einem Versorgungsnetz mit Wechselspannung versorgt wird und jeder Pitchantrieb von dem einen Eingangsgleichrichter oder von wenigstens einem der mehreren Eingangsgleichrichter mit elektrischer Energie versorgt wird, jeder Pitchantrieb mit einem Notenergiespeicher verbunden ist, wobei jeder Pitchantrieb durch den mit ihm verbundenen Notenergiespeicher mit elektrischer Energie versorgbar ist.

Das Versorgungsnetz kann zum Beispiel das allgemeine Stromnetz oder ein internes Versorgungsnetz einer Windenergieanlage sein, das von dem Generator der Windenergieanlage selbst oder von einer anderen Energiequelle gespeist wird, wie zum Beispiel einem Dieselgenerator oder einer Photovoltaikanlage.

Moderne Windenergieanlagen sind in der Regel mit elektrischen Pitchsystemen ausgestattet, die wenigstens einen Pitchantrieb aufweisen. In den meisten Fällen ist je Rotorblatt wenigstens ein Pitchantrieb vorgesehen. Durch Rotation der Rotorblätter um ihre jeweilige Längsachse regeln derartige Pitchsysteme die Stellung der Rotorblätter zum Wind und sind häufig die einzige sichere Möglichkeit den Rotor einer Windenergieanlage zum Stillstand zu bringen. Dies geschieht dadurch, dass der Pitchantrieb oder die Pitchantriebe die Rotorblätter in die so genannte Fahnenstellung drehen und der Rotor mangels Antrieb durch den Wind zum Stillstand kommt. Die Energieversorgung des Pitchsystems erfolgt üblicherweise durch das Netz, in das die Windenergieanlage auch den erzeugten Strom einspeist. Bei Netzausfall kann sich eine Gefahrensituation beispielsweise dadurch ergeben, dass bei Zunahme des Windes die Umdrehungsgeschwindigkeit des Rotors der Windenergieanlage einen zulässigen Höchstwert überschreitet und die Windenergieanlage oder in der Nähe befindliche Personen infolgedessen Schaden nehmen könnten.

Um eine derartige Gefahrensituation auch bei Netzausfall abwenden zu können müssen die Rotorblätter auch ohne die Energieversorgung des Pitchsystems durch das externe Netz in die Fahnenstellung verfahrbar sein. Hierzu ist aus dem Stand der Technik bekannt das Pitchsystem mit einem oder mehreren Notenergiespeichern auszustatten, die bei Netzausfall die Energieversorgung des Pitchsystems und somit die Einsatzfähigkeit des Pitchsystems gewährleisten, zumindest bis die Rotorblätter in die sichere Fahnenstellung gebracht worden sind.

Pitchantriebe können zum Beispiel einen Wechselrichter und einen elektrischen Pitchmotor aufweisen. Hierbei wird der Wechselrichter durch einen Eingangsgleichrichter mit elektrischer Energie versorgt, wobei der Wechselrichter mit dieser Energie den Pitchmotor betreibt. Als Pitchmotor kommen sowohl Gleichstrom- als auch Wechselstrommotoren in Frage.

Aus dem Stand der Technik bekannte Pitchsysteme weisen den Nachteil auf, dass sie empfindlich gegenüber Überspannungen sind und bereits bei geringen Überspannungen im Versorgungsnetz nicht mehr betrieben werden können.

Überspannungen im Versorgungsnetz können zum Beispiel durch Blitzeinschläge verursacht werden. Die hierbei erreichten Spannungen, denen das zu schützende Pitchsystem ausgesetzt wird, variieren stark je nach Einschlagsort des Blitzes und der Art der Einkopplung der Blitzenergie in das Versorgungsnetz. Daher werden im Stand der Technik Überspannungsschutzeinrichtungen verwendet, um das Pitchsystem bereits vor geringen Überspannungen zu schützen. Bekannte Überspannungsschutzeinrichtungen verwenden zum Beispiel Varistoren, Suppressordioden oder Gasableiter. Zum Schutz von Pitchsystemen werden in der Regel Varistoren eingesetzt.

Aus US 2013/0271056 A1 ist beispielsweise ein Pitchantrieb mit Wechselstrommotoren bekannt, bekannt bei welchem zur Erhöhung der Redundanz durch Schaltelemente ein drei-Phasen Motor in einer ersten Schaltposition mit Strom von zwei Wandlern und in einer zweiten Schaltposition, insbesondere bei Fehlern in Gleichrichtern oder Wandlern mit dem verbleibenden, intakten Wandler betrieben werden kann. Zusätzlich kann bei diesem Pitchantrieb jeder Wandler vom Stromversorgungsnetz getrennt werden.

Wird ein Pitchsystem trotz möglicherweise vorhandener Überspannungsschutzeinrichtungen einer selbst nur kurzzeitigen Überspannung ausgesetzt, wird aus Sicherheitsgründen umgehend eine Notfahrt durchgeführt, d. h. alle Rotorblätter werden durch die Pitchantriebe in die Fahnenstellung gedreht.

Damit ist es die Aufgabe der Erfindung, ein Verfahren zum Betrieb eines Pitchsystems einer Windenergieanlage anzugeben, das auch bei moderaten Netzüberspannungen einen weiteren Betrieb des Pitchsystems ermöglicht.

Die zuvor hergeleitete und aufgezeigte Aufgabe ist ausgehend von dem eingangs beschriebenen Verfahren zum Betrieb eines Pitchsystems einer Windenergieanlage dadurch gelöst, dass das Pitchsystem wenigstens eine Netzspannungsmesseinrichtung aufweist, jeder Eingangsgleichrichter wenigstens ein Halbleiterschaltelement aufweist mit dem ein Stromfluss aus dem Versorgungsnetz in den jeweiligen Eingangsgleichrichter sperrbar ist, wobei jede Netzspannungsmesseinrichtung die Spannung des Versorgungsnetzes misst und wenn die gemessene Spannung des Versorgungsnetzes oder ein aus den mehreren gemessenen Spannungen berechneter Wert einen ersten Spannungswert überschreitet jedes Halbleiterschaltelement den Stromfluss aus dem Versorgungsnetz in den jeweiligen Eingangsgleichrichter sperrt und jeder Pitchantrieb durch den mit ihm verbundenen Notenergiespeicher mit elektrischer Energie versorgt wird.

Durch das erfindungsgemäße Verfahren wird erreicht, dass die Pitchantriebe vor Überspannungen im Versorgungsnetz geschützt werden. Es hat sich nämlich überraschenderweise herausgestellt, dass die Halbleiterschaltelemente im sperrenden Zustand eine höhere Überspannungsfestigkeit aufweisen als insbesondere die Pitchantriebe. Somit reicht es zum Schutz der Pitchantriebe aus, den Stromfluss aus dem Versorgungsnetz in den oder die Eingangsgleichrichter zu sperren, um die restlichen Komponenten des Pitchsystems vor der Überspannung im Versorgungsnetz zu schützen. Im Weiteren kann mit der Spannung des Versorgungsnetzes sowohl die gemessene Spannung des Versorgungsnetzes als auch ein aus den mehreren gemessenen Spannungen berechneter Wert gemeint sein.

Erfindungsgemäß kann die Energieversorgung aller Pitchantriebe durch einen einzigen Notenergiespeicher erfolgen. Im Rahmen der Erfindung ist es jedoch ebenfalls möglich je Pitchantrieb einen oder mehrere Notenergiespeicher vorzusehen.

Zum Schutz des Pitchsystems vor Überspannungen, die die Überspannungsfestigkeit der Halbleiterschaltelemente überschreiten oder die schneller sind als die Reaktionszeit der Halbleiterschaltelemente, ist es möglich Überspannungsschutzeinrichtungen zu verwenden, wie sie aus dem Stand der Technik bekannt sind. Eine derartige Überspannungsschutzeinrichtung wird üblicherweise zwischen dem Versorgungsnetz und dem Eingangsgleichrichter oder den Eingangsgleichrichtern angeordnet.

Ferner hat es sich als vorteilhaft erwiesen, wenn die Überspannungsschutzeinrichtung ein Überwachungsmodul aufweist, wobei das Überwachungsmodul ein Warnsignal und/oder ein Fehlersignal auszugeben vermag.

Ein Warnsignal wird ausgegeben, wenn die Überspannungsschutzeinrichtung innerhalb eines gewissen Zeitraums ausgetauscht werden muss. Ein Austausch der Überspannungsschutzeinrichtung kann zum Beispiel erforderlich sein, wenn die Überspannungsschutzeinrichtung aufgrund von Alterung keinen verlässlichen Schutz vor Überspannungen mehr gewährleisten kann. Der Zeitraum innerhalb der die Überspannungsschutzvorrichtung ausgetauscht werden muss, hängt im Wesentlichen vom Alterungszustand der Überspannungsschutzeinrichtung ab. Durch einen Austausch der Überspannungsschutzeinrichtung in regelmäßigen Zeitintervallen unabhängig von einem Warnsignal kann ebenfalls sichergestellt werden, dass die Überspannungsschutzeinrichtung stets einen ausreichenden Schutz vor Überspannungen aus dem Versorgungsnetz bietet.

Ein Fehlersignal wird ausgegeben, wenn die Überspannungsschutzeinrichtung einen Defekt aufweist, der ihre Überspannungsschutzfunktion unmöglich macht. In diesem Fall kann das Fehlersignal dazu verwendet werden eine Notfahrt einzuleiten. Des Weiteren kann das Fehlersignal auch dazu verwendet werden die Wiederinbetriebnahme des Pitchsystems und somit der gesamten Windenergieanlage zu verhindern. Somit unterscheiden sich das Warnsignal und das Fehlersignal qualitativ. Während beim Warnsignal ein kurzfristiger Weiterbetrieb des Pitchsystems möglich ist, erfordert ein Fehlersignal in der Regel eine Notfahrt und ein Stillsetzen der Windenergieanlage, da durch eine weitere Überspannung das gesamte Pitchsystem ausfallen könnte.

Die beiden zuvor beschriebenen Signale können insbesondere optischer oder akustischer Natur sein. Besonders vorteilhaft ist, wenn das Überwachungsmodul wenigstens einen, insbesondere digitalen, Ausgang oder wenigstens einen Schaltkontakt je Signaltyp aufweist, über die die Signale an eine übergeordnete Steuerungseinrichtung ausgegeben werden können.

Gemäß einer vorteilhaften Weiterbildung der Erfindung ist vorgesehen, dass eine Notfahrt ausgelöst wird, wenn wenigstens ein Halbleiterschaltelement länger als eine erste Zeitspanne lang sperrend geschaltet ist. Da die in dem Notenergiespeicher oder in den Notenergiespeichern gespeicherte Energie begrenzt ist, kann das Pitchsystem nicht dauerhaft mit sperrenden Halbleiterschaltelementen betrieben werden. Um die Sicherheit der Windenergieanlage zu gewährleisten, muss daher rechtzeitig eine Notfahrt durchgeführt werden. Dies kann zum Beispiel durch einen Timer erfolgen, der misst, wie lange das Halbleiterschaltelement oder die Halbleiterschaltelemente sperrend geschaltet sind und bei Überschreiten einer ersten Zeitspanne automatisch die Notfahrt initiiert.

Eine vorteilhafte Ausgestaltung der Erfindung zeichnet sich dadurch aus, dass eine Notfahrt ausgelöst wird, wenn die gemessene Spannung des Versorgungsnetzes einen zweiten Spannungswert überschreitet. Da der Schutz des Pitchsystems durch die Überspannungsfestigkeit des Halbleiterschaltelements oder der Halbleiterschaltelemente begrenzt ist, wird hierdurch erreicht, dass bei einer Überspannung, die diese Überspannungsfestigkeit erreicht oder bis auf einen Sicherheitsabstand an diese Überspannungsfestigkeit herankommt, die Windenergieanlage durch eine Notfahrt in einen sicheren Zustand überführt wird.

Gemäß einer besonders vorteilhaften Weiterbildung der Erfindung ist vorgesehen, dass in der Verbindung zwischen dem Versorgungsnetz und dem einen Eingangsgleichrichter oder den mehreren Eingangsgleichrichtern ein Netzschütz angeordnet ist, wobei jeder Eingangsgleichrichter durch das Netzschütz von dem Versorgungsnetz getrennt wird, wenn die gemessene Spannung des Versorgungsnetzes einen zweiten Spannungswert überschreitet. Durch die Verwendung eines Netzschützes kann das Pitchsystem besonders effektiv vor weiteren Überspannungen geschützt werden, da das Netzschütz eine galvanische Trennung des Pitchsystems von dem Versorgungsnetz herzustellen vermag.

Bei einer bevorzugten Ausgestaltung der Erfindung ist vorgesehen, dass der zweite Spannungswert größer als der erste Spannungswert ist. Hierdurch wird erreicht, dass eine Öffnung des Netzschützes erst erfolgt nachdem das Halbleiterschaltelement oder die Halbleiterschaltelemente einen Stromfluss gesperrt haben.

Gemäß einer weiteren bevorzugten Ausgestaltung der Erfindung ist vorgesehen, dass in der Verbindung zwischen dem Versorgungsnetz und dem einen Eingangsgleichrichter oder den mehreren Eingangsgleichrichtern ein Netzschütz angeordnet ist, wobei jeder Eingangsgleichrichter durch das Netzschütz von dem Versorgungsnetz getrennt wird, wenn wenigstens ein Halbleiterschaltelement länger als eine erste Zeitspanne lang sperrend geschaltet ist. Auf diese Weise werden das Halbleiterschaltelement oder die Halbleiterschaltelemente vor länger andauernden Überspannungen geschützt.

Darüber hinaus ist es vorteilhaft, wenn eine Notfahrt ausgelöst wird, wenn die in dem Notenergiespeicher oder in den Notenergiespeichern gespeicherte Energie einen vorbestimmten Schwellwert unterschreitet. Durch diesen Auslösemechanismus einer Notfahrt kann immer gewährleistet, dass die in dem Notenergiespeicher oder in den Notenergiespeichern gespeicherte Energie ausreicht, um eine Notfahrt durchzuführen. Hierzu muss lediglich während das Halbleiterschaltelement oder die Halbleiterschaltelemente sperrend geschaltet sind die in dem Notenergiespeicher oder in den Notenergiespeichern gespeicherte Energie entweder gemessen oder durch geeignete Mittel zuverlässig geschätzt werden. Der Schwellwert wird hierbei so eingestellt, dass er mindestens der für eine Notfahrt notwendigen Energie entspricht.

Gemäß einer weiteren bevorzugten Weiterbildung der Erfindung ist vorgesehen, dass jedes Halbleiterschaltelement den Stromfluss in den jeweiligen Eingangsgleichrichter entsperrt, wenn die gemessene Spannung des Versorgungsnetzes einen dritten Spannungswert unterschreitet. Hierdurch wird der Übergang in den Normalbetrieb des Pitchsystems ermöglicht, bei dem das Pitchsystem wieder mit elektrischer Energie aus dem Versorgungsnetz betrieben wird.

Bei einer vorteilhaften Ausgestaltung der Erfindung ist vorgesehen, dass der dritte Spannungswert kleiner ist als der erste Spannungswert oder identisch mit dem ersten Spannungswert ist. Um ein ständiges Springen des Halbleiterschaltelements oder der Halbleiterschaltelemente vom entsperrten Schaltzustand in den gesperrten Schaltzustand zu vermeiden, kann dadurch, dass der dritte Spannungswert kleiner als der erste Spannungswert gewählt wird, eine Hysterese eingeführt werden.

Gemäß einer weiteren vorteilhaften Ausgestaltung der Erfindung ist vorgesehen, dass die Sperrung eines Stromflusses aus dem Versorgungsnetz in einen der Eingangsgleichrichter durch ein Halbleiterschaltelement wenigstens eine zweite Zeitspanne lang aufrechterhalten wird, bevor eine Entsperrung möglich ist. Hierdurch kann ebenfalls ein mehrfaches Springen des Halbleiterschaltelements oder der Halbleiterschaltelemente vom entsperrten Schaltzustand in den gesperrten Schaltzustand vermieden werden. Bei einer besonders vorteilhaften Ausgestaltung der Erfindung ist vorgesehen, dass die zweite Zeitspanne mindestens 250 Millisekunden, vorzugsweise mindestens 500 Millisekunden beträgt.

Bei einer vorteilhaften Weiterbildung der Erfindung ist vorgesehen, dass das Pitchsystem einen, insbesondere digitalen, Signalausgang aufweist, durch den ein Signal ausgegeben wird, wobei dieses Signal den Schaltzustand des Netzschützes wiedergibt. Dieses Signal kann zum Beispiel an eine übergeordnete Steuerungseinrichtung der Windenergieanlage ausgegeben werden.

Gemäß einer weiteren vorteilhaften Weiterbildung der Erfindung ist vorgesehen, dass jeder Eingangsgleichrichter eine Netzspannungsmesseinrichtung aufweist. Durch die Anordnung der Netzspannungsmesseeinrichtung im Eingangsgleichrichter wird ein besonders kurzer Signalweg zwischen der Netzspannungsmesseinrichtung und dem Halbleiterschaltelement oder der den Halbleiterschaltelementen erreicht. Folglich ist die Verzögerung zwischen Detektion einer Überspannung im Versorgungsnetz und der Sperrung des Halbleiterschaltelements oder der Halbleiterschaltelemente minimal. Bei der Verwendung mehrerer Eingangsgleichrichter können durch die Redundanz der Netzspannungsmesseinrichtungen Überspannungen im Versorgungsnetz besonders sicher detektiert werden, so dass selbst bei Ausfall einer der Netzspannungsmesseinrichtungen ein sicherer Betrieb des Pitchsystems weiterhin möglich ist.

Im Rahmen der Erfindung hat es sich als vorteilhaft herausgestellt, wenn wenigstens ein Halbleiterschaltelement durch einen Thyristor gebildet wird.

Im Einzelnen gibt es nun eine Vielzahl von Möglichkeiten, das erfindungsgemäße Verfahren zum Betrieb eines Pitchsystems einer Windenergieanlage auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
Fig. 1 schematisch ein Pitchsystem zur Ausführung des erfindungsgemäßen Verfahrens gemäß einer bevorzugten Weiterbildung der Erfindung und
Fig. 2 schematisch ein alternatives Pitchsystem zur Ausführung des erfindungsgemäßen Verfahrens gemäß einer weiteren bevorzugten Weiterbildung der Erfindung.

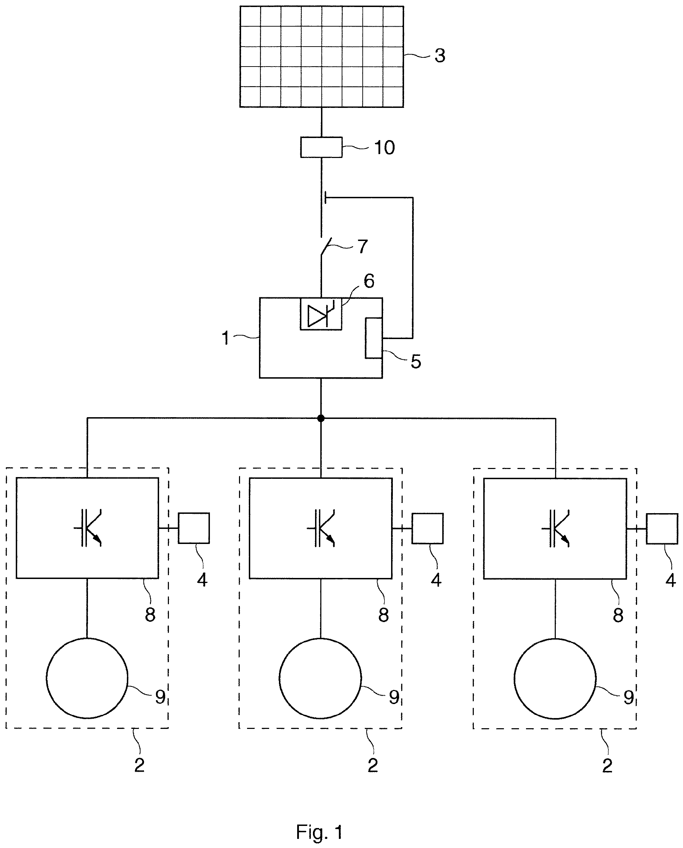

Die Fig. 1 zeigt ein Pitchsystem mit einem Eingangsgleichrichter 1 und drei Pitchantrieben 2. Durch die Pitchantriebe 2 sind die Rotorblätter einer nicht dargestellten Windenergieanlage antreibbar. Der Eingangsgleichrichter 1 ist mit einem Versorgungsnetz 3 verbunden, die beispielsweise durch das allgemeine Stromnetz gebildet werden kann. Der Eingangsgleichrichter 1 richtet den von dem Versorgungsnetz 3 bereitgestellten dreiphasigen Wechselstrom gleich und stellt ihn den Pitchantrieben 2 zur Verfügung. Jeder der Pitchantriebe 2 ist mit einem Notenergiespeicher 4 verbunden. Die Pitchantriebe 2 sind durch die Notenergiespeicher 4 mit elektrischer Energie versorgbar. Als Notenergiespeicher 4 kommen insbesondere Batterien oder Kondensatoren, hierbei vor allem sogenannte Ultracaps, in Frage. Der Eingangsgleichrichter 1 weist eine Netzspannungsmesseinrichtung 5 auf, die die Spannung des Versorgungsnetzes 3 überwacht.

Ferner weist der Eingangsgleichrichter 1 Halbleiterschaltelemente 6 auf, die in der Figur durch das Schaltzeichen für Thyristoren symbolisiert und vorzugsweise durch Thyristoren gebildet werden. Durch die Halbleiterschaltelemente 6 kann der Stromfluss aus jeder Phase der dreiphasigen Wechselstromversorgung durch das Versorgungsnetz 3 in den Eingangsgleichrichter 1 gesperrt werden. Zwischen dem Versorgungsnetz 3 und dem Eingangsgleichrichter 1 ist noch ein Netzschütz 7 angeordnet. Mit diesem Netzschütz 7 kann die Verbindung zwischen dem Eingangsgleichrichter 1 und dem Versorgungsnetz 3 getrennt werden.

Die Pitchantriebe 2 weisen jeweils einen Wechselrichter 8 und einen elektrischen Pitchmotor 9 auf. Jeder Wechselrichter 8 ist mit dem zugehörigen Pitchmotor 9 verbunden und versorgt diesen mit elektrischer Energie. Die Pitchmotoren 9 können die nicht dargestellten Rotorblätter der Windenergieanlage einerseits direkt antreiben, gegebenenfalls unter Verwendung eines Getriebes. Andererseits können die Pitchmotoren 9 auch jeweils eine Hydraulikpumpe eines hydraulischen Systems antreiben, wobei das hydraulische System zum Beispiel über einen Hydromotor oder einen hydraulisch angetriebenen Zylinder ein Rotorblatt antreibt.

Sobald die Netzspannungsmesseinrichtung 5 detektiert, dass die Spannung des Versorgungsnetzes 3 den ersten Spannungswert überschreitet, werden die Halbleiterschaltelemente 6 sperrend geschaltet und so eine weiterer Stromfluss aus dem Versorgungsnetz 3 in den Eingangsgleichrichter 1 verhindert.

Hierdurch sind die Pitchantriebe 2 vor der Überspannung aus dem Versorgungsnetz 3 geschützt. Solange die Halbleiterschaltelemente 6 sperrend geschaltet sind, werden die Pitchantriebe 2 von den Notenergiespeichern 4 mit elektrischer Energie versorgt.

Sobald die Spannung des Versorgungsnetzes 3 einen dritten Spannungswert unterschreitet werden die Halbleiterschaltelemente 6 des Eingangsgleichrichters 1 wieder entsperrt. Diese Entsperrung erfolgt nicht, sofern die Halbleiterschaltelemente 6 nicht zuvor mindestens 250 Millisekunden, vorzugsweise jedoch mindestens 500 Millisekunden lang gesperrt waren. Steigt jedoch die Spannung des Versorgungsnetzes 3 soweit an, dass sie einen zweiten Spannungswert überschreitet, wird das Netzschütz 7 geöffnet, so dass das Pitchsystem vor dieser Überspannung geschützt ist. Über einen nicht dargestellten Signalausgang wird der Zustand des Netzschützes 7 ausgegeben.

Ferner ist zwischen dem Versorgungsnetz 3 und dem Eingangsgleichrichter 1 eine Überspannungsschutzeinrichtung 10 vorgesehen, die insbesondere die Überspannungen ableitet, die von den Halbleiterschaltelementen 6 nicht sperrbar sind, weil die Überspannungen entweder zu schnell auftreten oder die Überspannungen die Überspannungsfestigkeit der Halbleiterschaltelemente 6 übertreffen.

Die Ausführung der einzelnen Verfahrensschritte kann zum Beispiel durch ein Computerprogramm erfolgen, welches auf einem Speichermedium gespeichert ist und durch eine Steuerungseinrichtung des Pitchsystems verarbeitet wird.

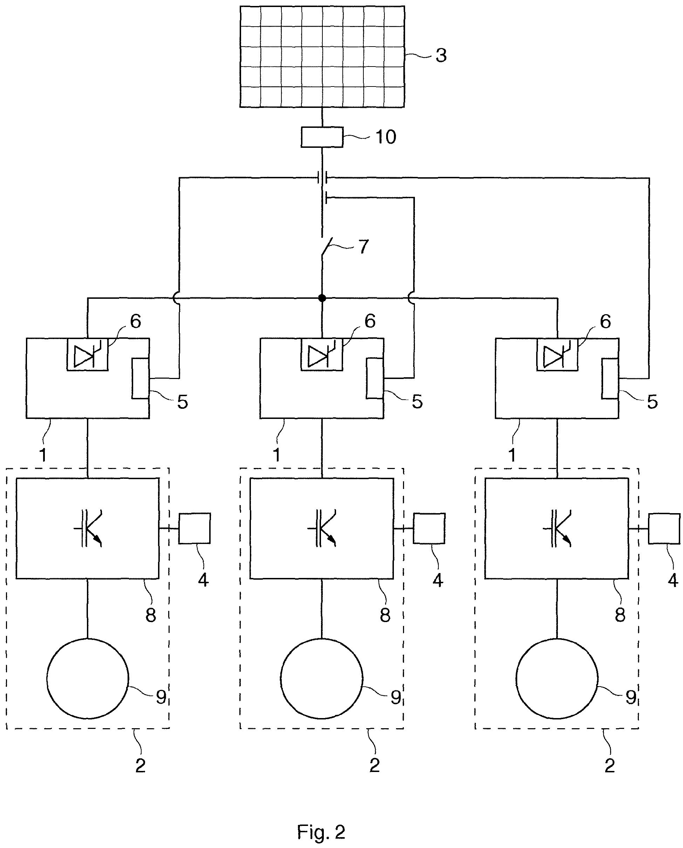

Fig. 2 zeigt eine alternative Ausgestaltung eines Pitchsystems zur Implementierung des erfindungsgemäßen Verfahrens. Im Unterschied zur Fig. 1 weist dieses Pitchsystem nicht einen zentralen Eingangsgleichrichter 1 sondern drei separate Eingangsgleichrichter 1 auf, die jeweils einen Pitchantrieb 2 mit elektrischer Energie versorgen. Des Weiteren weist jeder Eingangsgleichrichter 1 eine Netzspannungsmesseinrichtung 5 zur Messung der Spannung des Versorgungsnetzes 3 auf. Bei Detektion einer Überspannung durch die Netzspannungsmesseinrichtungen 5 werden die Halbleiterschaltelemente 6 aller Eingangsgleichrichter 1 sperrend geschaltet, so dass alle drei Pitchantriebe 2 vor der Überspannung geschützt sind. Darüber hinaus ist die Funktionsweise des erfindungsgemäßen Verfahrens identisch zu der in Bezug auf Fig. 1 beschriebenen Funktionsweise.

### Bezugszeichenliste

- 1: Eingangsgleichrichter
- 2: Pitchantrieb
- 3: Versorgungsnetz
- 4: Notenergiespeicher
- 5: Netzspannungsmesseinrichtung
- 6: Halbleiterschaltelement
- 7: Netzschütz
- 8: Wechselrichter
- 9: Pitchmotor
- 10: Überspannungsschutzeinrichtung

## Patentansprüche

1. Windenergieanlage mit wenigstens einem Rotorblatt, und einem Pitchsystem, wobei das Pitchsystem wenigstens einen Eingangsgleichrichter (1) aufweist und wenigstens einen Pitchantrieb (2) aufweist, wobei jedes Rotorblatt durch den einen Pitchantrieb (2) oder wenigstens einen der mehreren Pitchantriebe (2) um seine Längsachse drehbar ist, jeder Eingangsgleichrichter (1) von einem Versorgungsnetz (3) mit Wechselspannung versorgt wird und jeder Pitchantrieb (2) von dem einen Eingangsgleichrichter (1) oder von wenigstens einem der mehreren Eingangsgleichrichter (1) mit elektrischer Energie versorgt wird, jeder Pitchantrieb (2) mit einem Notenergiespeicher (4) verbunden ist, wobei jeder Pitchantrieb (2) durch den mit ihm verbundenen Notenergiespeicher (4) mit elektrischer Energie versorgbar ist,
dass das Pitchsystem wenigstens eine Netzspannungsmesseinrichtung (5) aufweist, jeder Eingangsgleichrichter (1) wenigstens ein Halbleiterschaltelement (6) aufweist mit dem ein Stromfluss aus dem Versorgungsnetz (3) in den jeweiligen Eingangsgleichrichter (1) sperrbar ist, wobei jede Netzspannungsmesseinrichtung (5) die Spannung des Versorgungsnetzes (3) misst
**dadurch gekennzeichnet**,
wenn die gemessene Spannung des Versorgungsnetzes (3) oder ein aus den mehreren gemessenen Spannungen berechneter Wert einen ersten Spannungswert überschreitet jedes Halbleiterschaltelement (6) den Stromfluss aus dem Versorgungsnetz (3) in den jeweiligen Eingangsgleichrichter (1) sperrt und jeder Pitchantrieb (2) durch den mit ihm verbundenen Notenergiespeicher (4) mit elektrischer Energie versorgt wird und dass in der Verbindung zwischen dem Versorgungsnetz (3) und dem einen Eingangsgleichrichter (1) oder den mehreren Eingangsgleichrichtern (1) ein Netzschütz (7) angeordnet ist, wobei jeder Eingangsgleichrichter (1) durch das Netzschütz (7) von dem Versorgungsnetz (3) getrennt wird, wenn die gemessene Spannung des Versorgungsnetzes (3) einen zweiten Spannungswert überschreitet, wobei der zweite Spannungswert größer als der erste Spannungswert ist.

2. Windenergieanlage nach Anspruch 1, **dadurch gekennzeichnet, dass** eine Notfahrt ausgelöst wird, wenn wenigstens ein Halbleiterschaltelement (6) länger als eine erste Zeitspanne lang sperrend geschaltet ist.

3. Windenergieanlage nach Anspruch 1 oder 2, **dadurch gekennzeichnet, dass** eine Notfahrt ausgelöst wird, wenn die gemessene Spannung des Versorgungsnetzes (3) einen zweiten Spannungswert überschreitet.

4. Windenergieanlage nach einem der Ansprüche 1 bis 3, **dadurch gekennzeichnet, dass** der in der Verbindung zwischen dem Versorgungsnetz (3) und dem einen Eingangsgleichrichter (1) oder den mehreren Eingangsgleichrichtern (1) angeordnete Netzschütz (7) jeden Eingangsgleichrichter (1) von dem Versorgungsnetz (3) trennt, wenn wenigstens ein Halbleiterschaltelement (6) länger als eine erste Zeitspanne lang sperrend geschaltet ist.

5. Windenergieanlage nach einem der Ansprüche 1 bis 4, **dadurch gekennzeichnet, dass** eine Notfahrt ausgelöst wird, wenn die in dem Notenergiespeicher (4) oder in den Notenergiespeichern (4) gespeicherte Energie einen vorbestimmten Schwellwert unterschreitet.

6. Windenergieanlage nach einem der Ansprüche 1 bis 5, **dadurch gekennzeichnet, dass** jedes Halbleiterschaltelement (6) den Stromfluss in den jeweiligen Eingangsgleichrichter (1) entsperrt, wenn die gemessene Spannung des Versorgungsnetzes (3) einen dritten Spannungswert unterschreitet.

7. Windenergieanlage nach Anspruch 6, **dadurch gekennzeichnet, dass** der dritte Spannungswert kleiner ist als der erste Spannungswert oder identisch mit dem ersten Spannungswert ist.

8. Windenergieanlage nach einem der Ansprüche 6 bis 7, **dadurch gekennzeichnet, dass** die Sperrung eines Stromflusses aus dem Versorgungsnetz (3) in einen der Eingangsgleichrichter (1) durch ein Halbleiterschaltelement (6) wenigstens eine zweite Zeitspanne lang aufrechterhalten wird, bevor eine Entsperrung möglich ist.

9. Windenergieanlage nach Anspruch 8, **dadurch gekennzeichnet, dass** die zweite Zeitspanne mindestens 250 Millisekunden, vorzugsweise mindestens 500 Millisekunden beträgt.

10. Windenergieanlage nach einem der Ansprüche 1 bis 9, **dadurch gekennzeichnet, dass** das Pitchsystem einen, insbesondere digitalen, Signalausgang aufweist, durch den ein Signal ausgegeben wird, wobei dieses Signal den Schaltzustand des Netzschützes (7) wiedergibt.

11. Windenergieanlage nach einem der Ansprüche 1 bis 10, **dadurch gekennzeichnet, dass** jeder Eingangsgleichrichter (1) eine Netzspannungsmesseinrichtung (5) aufweist.

12. Windenergieanlage nach einem der Ansprüche 1 bis 11, **dadurch gekennzeichnet, dass** wenigstens ein Halbleiterschaltelement (5) durch einen Thyristor gebildet wird.

13. Verfahren zum Betrieb eines Pitchsystems einer Windenergieanlage mit wenigstens einem Rotorblatt, wobei das Pitchsystem wenigstens einen Eingangsgleichrichter (1) aufweist und wenigstens einen Pitchantrieb (2) aufweist, wobei jedes Rotorblatt durch den einen Pitchantrieb (2) oder wenigstens einen der mehreren Pitchantriebe (2) um seine Längsachse drehbar ist, jeder Eingangsgleichrichter (1) von einem Versorgungsnetz (3) mit Wechselspannung versorgt wird und jeder Pitchantrieb (2) von dem einen Eingangsgleichrichter (1) oder von wenigstens einem der mehreren Eingangsgleichrichter (1) mit elektrischer Energie versorgt wird, jeder Pitchantrieb (2) mit einem Notenergiespeicher (4) verbunden ist, wobei jeder Pitchantrieb (2) durch den mit ihm verbundenen Notenergiespeicher (4) mit elektrischer Energie versorgbar ist, dass das Pitchsystem wenigstens eine Netzspannungsmesseinrichtung (5) aufweist, jeder Eingangsgleichrichter (1) wenigstens ein Halbleiterschaltelement (6) aufweist mit dem ein Stromfluss aus dem Versorgungsnetz (3) in den jeweiligen Eingangsgleichrichter (1) sperrbar ist, und und dass in der Verbindung zwischen dem Versorgungsnetz (3) und dem einen Eingangsgleichrichter (1) oder den mehreren Eingangsgleichrichtern (1) ein Netzschütz (7) angeordnet ist,
**dadurch gekennzeichnet,**
**dass** das Verfahren zur Steuerung des Pitchsystems folgende Schritte aufweist:
- Messen der Spannung des Versorgungsnetzes mit der Netzspannungsmesseinrichtung
- Berechnung eines Wertes aus ein oder den mehreren gemessenen Spannungen des Versorgungsnetzes (3)
- Vergleichen des berechneten Wertes mit einem ersten und einem zweiten Spannungswertes
- wenn der aus dem einen oder den mehreren gemessenen Spannungen berechnete Wert den ersten Spannungswert überschreitet Sperrung des Stromfluss aus dem Versorgungsnetz (3) in den jeweiligen Eingangsgleichrichter (1) mittels jedes Halbleiterschaltelement (6) und Versorgung jedes Pitchantriebes (2) durch den mit ihm verbundenen Notenergiespeicher (4) mit elektrischer Energie
- wenn die gemessene Spannung des Versorgungsnetzes (3) einen zweiten Spannungswert überschreitet, wobei der zweite Spannungswert größer als der erste Spannungswert ist, Trennung eines jeden Eingangsgleichrichter (1) von dem Versorgungsnetz (3) durch das Netzschütz (7).

14. Verfahren nach Anspruch 13, **gekennzeichnet durch** Auslösung einer Notfahrt wenn wenigstens ein Halbleiterschaltelement (6) länger als eine erste Zeitspanne lang sperrend geschaltet ist.

15. Computerprogrammprodukt mit Programminstruktionen zur Ausführung eines Verfahrens nach einem der vorhergehenden Ansprüche.

## Claims

1. A wind energy installation having at least one rotor blade, and a pitch system, wherein the pitch system comprises at least one input rectifier (1) and at least one pitch drive (2), wherein each rotor blade can be rotated about its longitudinal axis by a pitch drive (2) or at least one of multiple pitch drives (2); each input rectifier (1) is supplied with alternating voltage from a supply network (3) and each pitch drive (2) is supplied with electrical energy from the one input of the rectifier (1) or from at least one of multiple input rectifiers (1), each pitch drive (2) being connected to an emergency energy storage (4), wherein each pitch drive (2) can be supplied with electrical energy by the emergency energy storage (4) connected to it,
so that the pitch system comprises at least one line voltage measuring device (5), each input rectifier (1) comprises at least one semiconductor switching element (6) which can be blocked with a current flow from the supply network (3) into the respective input rectifier (1), wherein each line voltage measuring device (5) measures the voltage of the supply network (3),
**characterized in that**
if the measured voltage of the supply network (3) or a value calculated from multiple measured voltages exceeds a first voltage value, each semiconductor switching element (6) blocks the current flow from the supply network (3) into the respective input rectifier (1) and each pitch drive (2) is supplied with electrical energy from the emergency energy storage (4) connected to it and that in the connection between the supply network (3) and the one input rectifier (1) or the plurality of input rectifiers (1), a mains contactor (7) is arranged, wherein each input rectifier (1) is separated through the line contactor (7) from the supply network (3) if the measured voltage of the supply network (3) exceeds a second voltage value, wherein the second voltage value is greater than the first voltage value.

2. The wind energy installation according to claim 1, **characterized in that** an emergency travel is triggered when at least one semiconductor switching element (6) is blocked for longer than a first period of time.

3. The wind energy installation according to claim 1 or 2, **characterized in that** an emergency travel is triggered when the measured voltage of the supply network (3) exceeds a second voltage value.

4. The wind energy installation according to one of the claims 1 to 3, **characterized in that** the mains contactor (7) arranged in the connection between the supply network (3) and the one input rectifier (1) or multiple input rectifiers (1) separates each input rectifier (1) from the supply network (3) when at least one semiconductor switching element (6) is blocked for longer than a first period of time.

5. The wind energy installation according to one of the claims 1 to 4, **characterized in that** an emergency travel is triggered when the energy stored in the emergency energy storage (4) or in the emergency energy storages (4) drops below a predetermined threshold value.

6. The wind energy installation according to one of the claims 1 to 5, **characterized in that** each semiconductor switching element (6) unblocks the current flow into the respective input rectifier (1) when the measured voltage of the supply network (3) drops below a third voltage value.

7. The wind energy installation according to claim 6, **characterized in that** the third voltage value is lower than the first voltage value or is identical to the first voltage value.

8. The wind energy installation according to one of the claims 6 to 7, **characterized in that** the blocking of a current flow from the supply network (3) into one of the input rectifiers (1) is maintained by a semiconductor switching element (6) for at least a second period of time before unblocking is possible.

9. The wind energy installation according to claim 8, **characterized in that** the second period of time is at least 250 milliseconds, preferably at least 500 milliseconds.

10. The wind energy installation according to one of the claims 1 to 9, **characterized in that** the pitch system comprises a, in particular digital, signal output, through which a signal is output, wherein this signal represents the switching state of the mains contactor (7).

11. The wind energy installation according to one of the claims 1 to 10, **characterized in that** each input rectifier (1) comprises a mains voltage measuring device (5).

12. The wind energy installation according to one of the claims 1 to 11, **characterized in that** at least one semiconductor switching element (5) is formed by a thyristor.

13. A method of operating a pitch system of a wind turbine having at least one rotor blade, wherein the pitch system comprises at least one input rectifier (1) and at least one pitch drive (2), wherein each rotor blade is rotatable about its longitudinal axis by the one pitch drive (2) or at least by one of multiple pitch drives (2); each input rectifier (1) is supplied with alternating voltage by a supply network (3), and each pitch drive (2) is supplied with electrical energy by the one input rectifier (1) or by at least by one of multiple input rectifiers (1); each pitch drive (2) is connected to an emergency energy storage (4), wherein each pitch drive (2) is supplied with electrical energy through its connected emergency energy storage (4), so that the pitch system comprises at least one mains voltage measuring device (5), each input rectifier (1) comprises at least one semiconductor switching element (6) with which a current flow from the supply network (3) into the respective input rectifier (1) can be blocked and a mains contactor (7) is arranged in the connection between the supply network (3) and the one input rectifier (1) or multiple input rectifiers (1),
**characterized in that**
the method for controlling the pitch system comprises the following steps:
- measuring the voltage of the supply network with the mains voltage measuring device
- calculating a value from one or multiple measured voltages of the supply network (3)
- comparing the calculated value with a first and a second voltage value
- if the calculated value exceeds the first voltage value of the one or multiple measured voltages, blocking the flow of current from the supply network (3) into the input rectifier (1) by means of each semiconductor switching element (6) and supplying each pitch drive (2) with electrical energy by the emergency energy storage (4) connected to it
- if the measured voltage of the supply network (3) exceeds a second voltage value, wherein the second voltage value is greater than the first voltage value, separating each input rectifier (1) from the supply network (3) through the mains contactor (7).

14. The method according to claim 13, **characterized by** triggering an emergency drive when at least one semiconductor switching element (6) is switched off for longer than a first period of time.

15. The computer program product with program instructions for executing a process according to any of the preceding claims.

## Revendications

1. Éolienne comportant au moins une pâle de rotor et d'un système de pas, dans laquelle le système de pas présente au moins un redresseur d'entrée (1) et présente au moins une commande de pas (2), dans laquelle chaque pâle de rotor peut tourner autour de son axe longitudinal au moyen de la commande de pas (2) ou au moins d'une parmi plusieurs commandes de pas (2), chaque redresseur d'entrée (1) étant alimenté en tension alternative par un réseau d'alimentation (3) et chaque commande de pas (2) étant alimentée en énergie électrique par un redresseur d'entrée (1) ou par au moins un parmi plusieurs redresseurs d'entrée (1), chaque commande de pas (2) étant raccordée à un accumulateur d'énergie de secours (4), chaque commande de pas (2) pouvant être alimentée en énergie électrique par l'accumulateur d'énergie de secours (4) auquel elle est raccordée,
en ce que le système de pas présente au moins un dispositif de mesure de tension de réseau (5), chaque redresseur d'entrée (1) présente au moins un élément de commutation à semi-conducteur (6) qui permet de bloquer le courant électrique provenant du réseau d'alimentation (3) dans les redresseurs d'entrée (1) respectifs, dans laquelle chaque dispositif de mesure de tension de réseau (5) mesure la tension du réseau d'alimentation (3)
**caractérisée en ce que**,
lorsque la tension mesurée du réseau d'alimentation (3) ou une valeur calculée à partir de plusieurs tensions mesurées dépasse une première valeur de tension, chaque élément de commutation à semi-conducteur (6) bloque le courant électrique provenant du réseau d'alimentation (3) dans les redresseurs d'entrée (1) respectifs et chaque commande de pas (2) est alimentée en énergie électrique par l'accumulateur d'énergie de secours (4) auquel elle est raccordée et **en ce que** dans le raccordement entre le réseau d'alimentation (3) et ledit un redresseur d'entrée (1) ou lesdits plusieurs redresseurs d'entrée (1) est disposé un dispositif de protection (7) du réseau, dans laquelle chaque redresseur d'entrée (1) est séparé du réseau d'alimentation (3) par le dispositif de protection (7) du réseau, lorsque la tension mesurée du réseau d'alimentation (3) dépasse une deuxième valeur de tension, dans laquelle la deuxième valeur de tension est supérieure à la première valeur de tension.

2. Éolienne selon la revendication 1, **caractérisée en ce qu'**un démarrage d'urgence est déclenché lorsqu'au moins un élément de commutation à semi-conducteur (6) est commuté en position de blocage long pendant une durée plus longue qu'un premier intervalle de temps.

3. Éolienne selon la revendication 1 ou 2, **caractérisée en ce qu'**un démarrage d'urgence est déclenché, lorsque la tension mesurée du réseau d'alimentation (3) dépasse une deuxième valeur de tension.

4. Éolienne selon l'une quelconque des revendications 1 à 3, **caractérisée en ce que** le dispositif de protection du réseau (7) disposé dans le raccordement entre le réseau d'alimentation (3) et ledit un redresseur d'entrée (1) ou lesdits plusieurs redresseurs d'entrée (1) sépare chaque redresseur d'entrée (1) du réseau d'alimentation (3), lorsqu'au moins un élément de commutation à semi-conducteur (6) est commuté en position de blocage long pendant une durée plus longue qu'un premier intervalle de temps.

5. Éolienne selon l'une quelconque des revendications 1 à 4, **caractérisée en ce qu'**un démarrage d'urgence est déclenché lorsque l'énergie stockée dans l'accumulateur d'énergie de secours (4) ou dans les accumulateurs d'énergie de secours (4) passe en dessous d'une valeur de seuil prédéfinie.

6. Éolienne selon l'une quelconque des revendications 1 à 5, **caractérisée en ce que** chaque élément de commutation à semi-conducteur (6) débloque le courant électrique dans les redresseurs d'entrée (1) respectifs, lorsque la tension mesurée du réseau d'alimentation (3) passe en dessous d'une troisième valeur de tension.

7. Éolienne selon la revendication 6, **caractérisée en ce que** la troisième valeur de tension est inférieure à la première valeur de tension ou la même que la première valeur de tension.

8. Éolienne selon l'une quelconque des revendications 6 à 7, **caractérisée en ce que** le blocage d'un courant électrique provenant du réseau d'alimentation (3) est maintenu dans l'un des redresseurs d'entrée (1) par un élément de commutation à semi-conducteur (6) au moins pendant un deuxième intervalle de temps avant qu'un déblocage ne soit possible.

9. Éolienne selon la revendication 8, **caractérisée en ce que** le deuxième intervalle de temps vaut au moins 250 millisecondes, de préférence au moins 500 millisecondes.

10. Éolienne selon l'une quelconque des revendications 1 à 9, **caractérisée en ce que** le système de pas présente une sortie de signal, notamment numérique, par laquelle est émis un signal, dans laquelle ledit signal reproduit l'état de commutation du dispositif de protection du réseau (7).

11. Éolienne selon l'une quelconque des revendications 1 à 10, **caractérisée en ce que** chaque redresseur d'entrée (1) présente un dispositif de mesure de tension de réseau (5).

12. Éolienne selon l'une quelconque des revendications 1 à 11, **caractérisée en ce qu'**au moins un élément de commutation à semi-conducteur (5) est conçu sous la forme d'un thyristor.

13. Procédé de fonctionnement d'un système de pas d'une éolienne comportant au moins une pale de rotor, dans lequel le système de pas présente au moins un redresseur d'entrée (1) et présente au moins une commande de pas (2), dans lequel chaque pâle de rotor peut tourner autour de son axe longitudinal au moyen de ladite une commande de pas (2) ou au moins d'une parmi plusieurs commandes de pas (2), chaque redresseur d'entrée (1) étant alimenté en tension alternative par un réseau d'alimentation (3) et chaque commande de pas (2) étant alimentée en énergie électrique par un redresseur d'entrée (1) ou par au moins un parmi plusieurs redresseurs d'entrée (1), chaque commande de pas (2) étant raccordée à un accumulateur d'énergie de secours (4), dans laquelle chaque commande de pas (2) peut être alimentée en énergie électrique par l'accumulateur d'énergie de secours (4) auquel elle est raccordée, en ce que le système de pas présente au moins un dispositif de mesure de tension de réseau (5), chaque redresseur d'entrée (1) présentant au moins un élément de commutation à semi-conducteur (6) qui permet de bloquer un courant électrique provenant du réseau d'alimentation (3) dans les redresseurs d'entrée (1) respectifs, et et en ce que dans le raccordement entre le réseau d'alimentation (3) et ledit un redresseur d'entrée (1) ou lesdits plusieurs redresseurs d'entrée (1) est disposé un dispositif (7) de protection du réseau,
**caractérisée en ce que**,
le procédé de commande du système de pas présente les étapes suivantes consistant à :
- mesurer la tension du réseau d'alimentation au moyen du dispositif de mesure de tension de réseau
- calculer une valeur à partir d'une ou de plusieurs tensions mesurées du réseau d'alimentation (3)
- comparer la valeur calculée à une première et une deuxième valeur de tension
- lorsque la valeur calculée à partir d'une ou de plusieurs tensions mesurées dépasse la première valeur de tension, bloquer le courant électrique provenant du réseau d'alimentation (3) dans les redresseurs d'entrée (1) respectifs à l'aide de chaque élément de commutation à semi-conducteur (6) et alimenter chaque commande de pas (2) en énergie électrique par l'accumulateur d'énergie de secours (4) auquel elle est raccordée
- lorsque la tension mesurée du réseau d'alimentation (3) dépasse une deuxième valeur de tension, où la deuxième valeur de tension est supérieure à la première valeur de tension, séparer chacun des redresseurs d'entrée (1) du réseau d'alimentation (3) au moyen du dispositif (7) de protection du réseau.

14. Procédé selon la revendication 13, **caractérisé par** le déclenchement d'un démarrage d'urgence lorsqu'au moins un élément de commutation à semi-conducteur (6) est commuté en position de blocage long pendant une durée plus longue qu'un premier intervalle de temps.

15. Produit de programme informatique comportant des instructions de programme destinées à exécuter un procédé selon l'une des revendications précédentes.
